# EUROPÄISCHE PATENTSCHRIFT

(11) **EP 2 046 869 B1**
(45) Veröffentlichungstag und Bekanntmachung des Hinweises auf die Patenterteilung: **25.12.2013**
(21) Anmeldenummer: 07725740.0
(22) Anmeldetag: 01.06.2007
(51) Int. Cl.: C08J 3/12

(54) **VERFAHREN ZUM HERSTELLEN EINES RIESELFÄHIGEN PULVERS EINES FLUORPOLYMERS UND NACH DEM VERFAHREN HERGESTELLTES RIESELFÄHIGES PULVER**
PROCESS FOR PREPARING A FREE-FLOWING POWDER OF A FLUOROPOLYMER AND FREE-FLOWING POWDER PREPARED BY THIS PROCESS
PROCÉDÉ DE FABRICATION D'UNE POUDRE FLUIDE D'UN FLUOROPOLYMÈRE ET POUDRE FLUIDE OBTENUE PAR LE PROCÉDÉ

(30) Priorität: 03.08.2006 DE 102006036204
(43) Veröffentlichungstag der Anmeldung: 15.04.2009
(73) Patentinhaber: ElringKlinger AG, 72581 Dettingen (DE)
(72) Erfinder: SCHLIPF, Michael, 89520 Heidenheim (DE); METZGER, Martin, 88316 Isny (DE)
(74) Vertreter: Hörner, Andreas
(86) Internationale Anmeldenummer: PCT/EP2007/004860
(87) Internationale Veröffentlichungsnummer: WO 2008/014839

(56) Entgegenhaltungen:
- EP-A1- 1 120 436
- EP-A1- 1 449 866
- US-A- 6 037 402
- US-A1- 2002 125 602
- ROY A ROBINSON: "Pelleting - The Uses Expand" COMPRESSED AIR, COMPRESSED AIR MAGAZINE CO. PHILLIPSBURG, US, Bd. 87, Nr. 11, November 1982 (1982-11), Seiten 34-37, XP002089271 ISSN: 0010-4426
- RUMPF H: "Grundlagen und Methoden des Granulierens" CHEMIE INGENIEUR TECHNIK, WILEY VCH. VERLAG, WEINHEIM, DE, Bd. 30, Nr. 5, Mai 1958 (1958-05), Seiten 329-336, XP002089272 ISSN: 0009-286X

## Beschreibung

Die vorliegende Erfindung betrifft ein Verfahren zum Herstellen eines rieselfähigen Pulvers eines Fluorpolymers. Ferner betrifft die vorliegende Erfindung ein nach diesem Verfahren hergestelltes rieselfähiges Pulver eines Fluorpolymers.

Suspensions-Fluorpolymere, insbesondere Suspensions-PTFE und chemisch modifiziertes Suspensions-PTFE, werden in Rührreaktoren in Gegenwart von Wasser in Batch-Prozessen hergestellt. Nach der Polymerisation wird die wässerige Phase in mehreren Stufen abgetrennt, und das erhaltene Suspensions-Rohpolymerisat wird getrocknet und gemahlen.

Die nach diesem Verfahren hergestellten Fluorpolymer-Pulver, insbesondere PTFE-Pulver und modifizierte PTFE-Pulver, weisen eine Pulverschüttdichte von 100 g/l bis 700 g/l und eine mittlere Korngröße d₅₀ von 5 µm bis 100 µm auf.

Diese PTFE-Pulver können wegen der schlechten Rieselfähigkeit nur manuell, beispielsweise unter Verwendung einer Schaufel, verarbeitet werden. Eine automatische Verarbeitung, insbesondere unter Verwendung von automatischen Befüll- oder Dosiereinrichtungen, ist damit nicht möglich.

Die Schüttdichte solcher nicht-rieselfähigen Pulver variiert in einem breiten Bereich und verändert sich unter äußerer Einwirkung, wie zum Beispiel Bewegung, Druck oder Rütteln sehr stark. Dadurch wird eine gleichmäßige Befüllung der Pressform mit anschließender homogener Verdichtung des Pulvers beim Verpressen erschwert. Inhomogene Materialeigenschaften im Endprodukt oder interne Spannungen nach dem Sintern können die Folge sein.

Aus der WO 98/41567 A1 und der WO 98/41568 A1 ist ein Verfahren zur Überführung von nicht-rieselfähigem PTFE-Pulver bzw. von nicht-rieselfähigem modifiziertem PTFE-Pulver in PTFE-Pulver mit guter Rieselfähigkeit bekannt. Bei diesem Verfahren werden, ausgehend von einem nicht-rieselfähigen Pulver, zum Granulieren stufenweise oder kontinuierlich arbeitende Reaktoren benutzt, in denen Wasser und ein mit Wasser nicht mischbares organisches Lösemittel sowie gegebenenfalls ein nichtionisches Tensid stark gerührt werden.

Bei einem anderen Verfahren wird ein gemahlenes PTFE-Pulver mit einem Alkohol, vorzugsweise mit Isopropyl-Alkohol, versetzt. Diese Mischung wird anschließend zu einer knetbaren Masse homogenisiert, die mittels einer speziellen Siebmühle in eine Stäbchenform überführt und direkt zentrisch auf einen Vibrationsteller aufgebracht wird. Die spiralförmige Kontur des Vibrationstellers befördert das Produkt zum Außenrand des Tellers, wo es entnommen wird. Dabei bewirkt die Vibrationsbewegung, dass die ursprünglich stäbchenförmigen Partikel in ein Granulatkorn überführt werden. Nach einem anschließenden Trocknungsprozess, bei dem der Alkohol entfernt und das Agglomerat verfestigt wird, liegt das Produkt in einer rieselfähigen Agglomeratform vor.

Bei einem weiteren bekannten Verfahren wird ausgehend von einem gemahlenen PTFE-Pulver ein Gemisch aus Wasser und einer grenzflächenaktiven Substanz, beispielsweise einem Tensid oder Glykol, verwendet, um ein rieselfähiges Agglomerat zu erhalten.

Die vorstehend genannten Granulierverfahren weisen jedoch zahlreiche Nachteile auf; so kann es insbesondere durch die Verwendung der Lösemittel zur Bildung von explosionsfähigen Gas/Luft-Gemischen kommen. Die verwendeten Lösemittel können gesundheitliche Probleme für die Mitarbeiter aufwerfen, insbesondere wenn es sich um toxische Lösemittel, beispielsweise Methylenchlorid, handelt. Das mittels dieser Verfahren hergestellte rieselfähige Produkt kann durch eingelagerte Reste von Tensiden kontaminiert sein. Zur Entfernung von Wasser, Lösemittel und/oder Tensid aus dem Produkt sind aufwendige Trocknungsprozesse erforderlich. Ferner sind die bekannten Granulierverfahren aufgrund der Vielzahl erforderlicher Prozessschritte häufig unwirtschaftlich.

Die EP-A1-1 449 866 offenbart ein Nassgranulierungsverfahren zum Herstellen eines rieselfähigen Pulvers eines Fluorpolymers, bei dem ein PTFE-Pulver in entionisiertes Wasser eingebracht wird, ein Tensid und eine organische Flüssigkeit zugesetzt werden, das Gemisch durchgerührt wird und anschließend das Granulat von der Flüssigkeit abgetrennt und getrocknet wird.

Die US-A-6 037 402 offenbart ein Nassgranulierungsverfahren zum Herstellen eines rieselfähigen Pulvers eines Fluorpolymer-Compounds, bei dem ein PTFEhaltiges Pulver in entionisiertes Wasser eingebracht wird, ein Tensid und eine organische Flüssigkeit zugesetzt werden, das Gemisch durchgerührt wird und anschließend das Granulat von der Flüssigkeit abgetrennt und getrocknet wird.

Roy A. Robinson: "Pelleting - The Uses Expand" Compressed Air, Compressed Air Magazine Co. Phillipsburg, US, Bd. 87, Nr. 11, November 1982 (1982-11), Seiten 34-37, XP002089271 ISSN: 0010-4426 offenbart Pelletierverfahren zum Herstellen von Pellets aus Amiden, Pottasche, Harnstoff, Zirkonium, Katalysatoren oder recycelten thermoplastischen Kunststoffen.

Rumpf H.: "Grundlagen und Methoden des Granulierens" Chemie Ingenieur Technik, Wiley VCH. Verlag, Weinheim, DE, Bd. 30, Nr. 5, Mai 1958 (1958-05), Seiten 329-336, XP002089272 ISSN: 0009-286X offenbart technische Granulierverfahren zum Herstellen von grobkörnigen Granulaten aus Metall, Kohlenstaub, Düngemitteln und anorganischen Chemikalien oder aus Futtermitteln.

Der vorliegenden Erfindung liegt die Aufgabe zugrunde, ein einfaches und wirtschaftliches Verfahren zum Herstellen eines rieselfähigen Pulvers eines Fluorpolymers zu schaffen, wobei das Fluoropolymer Polytetrafluoroethylen (PTFE) oder modifiziertes Polytetrafluoroethylen enthält.

Diese Aufgabe wird durch ein Trockengranulierungsverfahren nach Anspruch 1 gelöst.

Dabei sind unter "Schülpen" stückige, bandförmige Zwischenprodukte zu verstehen, welche durch das Verpressen des pulverförmigen Ausgangsmaterials erzeugt werden.

Das erfindungsgemäße Verfahren ist ein trockenes Verfahren, d.h. eine Trockengranulierung des Fluorpolymers ohne Zusatz von Lösemitteln bzw. Wasser/Tensid-Gemisch.

Damit entfallen bei dem erfindungsgemäßen Verfahren alle auf die Verwendung von Lösemitteln zurückzuführenden Nachteile der bekannten Granulierverfahren, insbesondere die damit verbundenen Emissionsprobleme und das Problem einer möglichen Kontamination des Endproduktes durch eingelagerte Reste von Lösemittelbestandteilen oder Zusatzstoffen.

Das erfindungsgemäße Trockengranulierverfahren ist besonders einfach aufgebaut und umfasst nur wenige Prozessschritte, weshalb es besonders wirtschaftlich durchführbar ist.

Das gemäß dem erfindungsgemäßen Verfahren erhaltene Pulver eines Fluor-polymers weist eine gute Rieselfähigkeit auf und lässt sich durch automatische Vorrichtungen leicht in Maschinen zur Weiterverarbeitung dosieren.

Prinzipiell sind alle Maschinen, die typischerweise für die Pressverarbeitung von PTFE-Pulvern eingesetzt werden, für die Weiterverarbeitung des erfindungsgemäß hergestellten Pulvers geeignet, also zum Beispiel: hydraulische Pressen, automatische und isostatische Pressen oder die Ramextrusion.

Insbesondere eignet sich das auf diese Weise hergestellte Pulver zur Verarbeitung mittels Ramextrusion.

Die elektrostatische Aufladbarkeit des rieselfähigen Pulvers kann im Vergleich zu dem nicht rieselfähigen pulverförmigen Ausgangsmaterial vernachlässigt werden, weshalb auch das Risiko einer Kontamination des rieselfähigen Endprodukts sehr gering ist.

Das pulverförmige Ausgangsmaterial enthält mindestens ein pulverförmiges, vorzugsweise gemahlenes, Fluorpolymer-Material.

Das pulverförmige Ausgangsmaterial enthält als Fluorpolymer-Material Polytetrafluorethylen (PTFE) oder modifiziertes Polytetrafluorethylen.

Beide PTFE-Typen werden durch Suspensions-Polymerisation hergestellt.

Unter einem "modifizierten Polytetrafluorethylen" ist dabei ein PTFE-ähnlicher Stoff zu verstehen, bei welchem die Molekülstruktur des PTFE dadurch chemisch modifiziert worden ist, dass neben TFE noch ein weiteres, ebenfalls perfluoriertes Monomer in die Molekülkette eingebaut wurde, so dass die Fluoratome des PTFE teilweise durch Substituenten ersetzt sind.

Die chemische Zusammensetzung und Herstellung von "modifiziertem PTFE" sind beispielsweise in der EP 0 041 687 A1, der EP 0 931 798 A1 oder der US-Patentschrift Nr. 6,013,700 beschrieben.

Das als Bestandteil des pulverförmigen Ausgangsmaterials verwendete PTFE oder modifizierte PTFE wird vorzugsweise als Suspensions-PTFE bzw. chemisch modifiziertes Suspensions-PTFE in Rührreaktoren in Gegenwart von Wasser in Batch-Prozessen hergestellt, wobei nach der Polymerisation die wässrige Phase in mehreren Stufen abgetrennt und das erhaltene Suspensions-Rohpolymerisat getrocknet und gemahlen wird.

Das für das erfindungsgemäße Verfahren verwendete pulverförmige Ausgangsmaterial weist vorzugsweise ein Schüttgewicht von 100 g/l bis 700 g/l auf.

Das mittels des erfindungsgemäßen Verfahrens hergestellte rieselfähige Pulver weist vorzugsweise ein Schüttgewicht von 400 g/l bis 1.600 g/l auf.

Besonders günstig ist es, wenn das rieselfähige Pulver ein höheres Schüttgewicht aufweist als das pulverförmige Ausgangsmaterial.

Das Fluorpolymer-Material des pulverförmigen Ausgangsmaterials weist vorzugsweise eine mittlere Korngröße d₅₀ von 5 µm bis 100 µm auf.

Das mittels des erfindungsgemäßen Verfahrens hergestellte rieselfähige Pulver weist vorzugsweise eine mittlere Korngröße d₅₀ von 300 µm bis 2.500 µm auf.

Besonders günstig ist es, wenn das rieselfähige Pulver eine höhere mittlere Korngröße d₅₀ aufweist als das Fluorpolymer-Material in dem pulverförmigen Ausgangsmaterial.

Grundsätzlich ist es möglich, das pulverförmige Ausgangsmaterial einfach aufgrund der Wirkung der Schwerkraft einer Verpressvorrichtung zuzuführen, in welcher das Ausgangsmaterial zu Schülpen verpresst wird.

Bei einer bevorzugten Ausgestaltung des erfindungsgemäßen Verfahrens ist jedoch vorgesehen, dass das pulverförmige Ausgangsmaterial mittels einer Schnecke zu einer solchen Verpressvorrichtung gefördert wird.

Wenn eine solche Verpressvorrichtung zwei einander gegenüberliegende Walzen aufweist, so reicht die Schnecke zur Förderung des pulverförmigen

Ausgangsmaterials vorzugsweise bis in den Zwickelbereich zwischen den einander gegenüberliegenden Walzen hinein.

Die Schnecke weist vorzugsweise eine im wesentlichen vertikale Drehachse auf.

Ferner wird die Schnecke vorzugsweise mit einer Drehzahl von 10 U/min. bis 100 U/min. betrieben.

Die Schnecke kann eine längs der Förderrichtung der Schnecke abnehmende Steigung und/oder einen längs der Förderrichtung der Schnecke abnehmenden Durchmesser aufweisen.

Die Förderkammer, in welcher die Schnecke angeordnet ist, kann eine glatte Innenwand aufweisen.

Bei einer bevorzugten Ausgestaltung der Erfindung ist vorgesehen, dass die Schnecke in einer Förderkammer angeordnet ist, welche mindestens eine wendelförmig um die Förderrichtung der Schnecke verlaufende Nut aufweisen kann, um so die Vorschubwirkung der Schnecke zu unterstützen.

Bei dem erfindungsgemäßen Verfahren kann vorgesehen sein, dass das pulverförmige Ausgangsmaterial vor dem Verpressen vorverdichtet wird, beispielsweise mittels einer das Ausgangsmaterial zu der Verpressvorrichtung fördernden Schnecke.

Ferner kann vorgesehen sein, dass das pulverförmige Ausgangsmaterial vor dem Verpressen zumindest teilweise entlüftet wird.

Bei einer bevorzugten Ausgestaltung des erfindungsgemäßen Verfahrens ist vorgesehen, dass das pulverförmige Ausgangsmaterial mittels mindestens einer Walze, insbesondere mittels eines Walzenpaars, zu den Schülpen verpresst wird.

Die Walze bzw. die Walzen werden vorzugsweise mit einer spezifischen Anpresskraft von 1 kN/cm bis 10 kN/cm betrieben.

Ferner wird die Walze bzw. werden die Walzen mit einer Drehzahl von 3 U/min. bis 10 U/min. betrieben.

Die Walzen können mit einer glatten Walzenmantelfläche oder auch mit einer profilierten Walzenmantelfläche versehen sein.

Die Walzen oder zumindest die Walzenoberflächen können aus Metall, aus Thermoplast oder Duropolast und/oder aus einem Elastomer aufgebaut sein.

Die Verpressung der Trockenmischung zu den Schülpen erfolgt vorzugsweise so, dass die spezifische Dichte der durch Verpressen des Ausgangsmaterials hergestellten Schülpen von 1,3 g/cm³ bis 2,1 g/cm³ beträgt.

Die durch das Verpressen des Ausgangsmaterials hergestellten Schülpen werden vorzugsweise mittels einer Mühle zerkleinert.

Insbesondere kann hierfür eine Siebmühle verwendet werden.

Die Mühle wird vorzugsweise mit einer Drehzahl von 60 U/min. bis 400 U/min. betrieben.

Gegenstand von Anspruch 25 ist ein rieselfähiges Pulver eines Fluorpolymers, das durch ein erfindungsgemäßes Trockengranulierungsverfahren hergestellt ist.

Dieses rieselfähige Pulver eignet sich insbesondere zur Herstellung von PTFE-Halbzeugen mittels Ramextrusion.

Bevorzugte Halbzeuge sind Stäbe, Rohre oder andere Extrudate mit einfachen Querschnitten.

Durch das erfindungsgemäße Trockengranulierungsverfahren- können insbesondere die folgenden Vorteile erzielt werden:
Das Schüttgewicht des pulverförmigen Ausgangsmaterials im Bereich von 100 g/l bis 700 g/l wird auf das Schüttgewicht des rieselfähigen Pulvers im Bereich von 400 g/l bis 1.500 g/l erhöht.

Zugleich wird das Pulver im Hinblick auf das Schüttgewicht stabilisiert, so dass es ein im Wesentlichen homogenes Schüttgewicht aufweist, was eine gleichmäßige Befüllung der Pressform mit anschließender homogener Verdichtung des rieselfähigen Pulvers beim Pressen im Zuge einer Weiterverarbeitung ermöglicht.

An die Stelle der Korngrößenverteilung des gemahlenen Fluorpolymer-Pulvers in dem Ausgangsmaterial mit einer mittleren Korngröße von d₅₀ im Bereich von ungefähr 5 µm bis ungefähr 100 µm tritt die Korngrößenverteilung des rieselfähigen Pulvers mit Agglomeraten mit einer mittleren Korngröße im Bereich von 300 µm bis 2.500 µm.

Die elektrostatische Aufladbarkeit wird durch das erfindungsgemäße Trockengranulationsverfahren reduziert, wodurch auch die Gefahr eines Schmutzeintrages und der Entmischung während der anschließenden Verarbeitung des rieselfähigen Pulvers reduziert wird.

Durch die automatische Weiterverarbeitbarkeit des durch das erfindungsgemäße Verfahren hergestellten rieselfähigen Pulvers wird die Wirtschaftlichkeit und Reproduzierbarkeit der anschließenden Weiterverarbeitung des Pulvers verbessert.

Die Erhöhung des Schüttgewichtes durch das erfindungsgemäße Verfahren, eine Folge des Granulierschrittes, steigert die Wirtschaftlichkeit insbesondere bei automatischer Pressverarbeitung und ermöglicht außerdem die Herstellung von Produkten mit größeren Abmessungen als dies bei nicht-rieselfähigen Pulvern und unter Verwendung der gleichen Pressformen möglich ist.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Darstellung einer Vorrichtung zum Herstellen eines rieselfähigen Pulvers eines Fluorpolymers aus einem pulverförmigen Ausgangsmaterial;
- Fig. 2: einen schematischen Schnitt durch eine Verpressvorrichtung der Vorrichtung aus Fig. 1, welche ein Paar von Walzen umfasst, und eine das Ausgangsmaterial zu der Verpressvorrichtung fördernde Schnecke;
- Fig. 3: einen schematischen Schnitt durch eine Siebmühle, welche mittels der Verpressvorrichtung aus Fig. 2 hergestellte Schülpen zu dem rieselfähigen Pulver zerkleinert;
- Fig. 4: eine teilweise geschnittene perspektivische Darstellung einer zylindrischen Förderkammer mit einer wendelförmigen Nut zur Unterstützung der Vorschubwirkung der Schnecke; und
- Fig. 5: eine Abwicklung der Umfangswand der Förderkammer aus Fig. 4.

Gleiche oder funktional äquivalente Elemente sind in allen Figuren mit denselben Bezugszeichen bezeichnet.

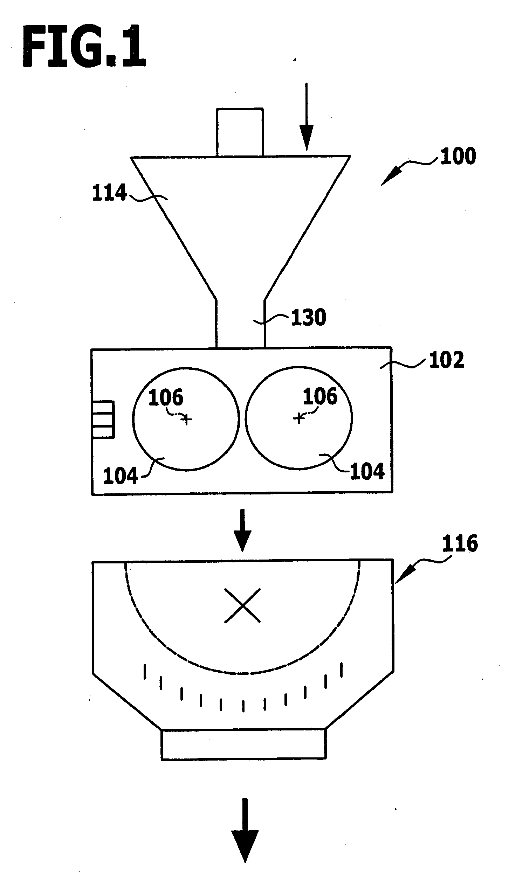

Eine in den Fig. 1 bis 5 dargestellte, als Ganzes mit 100 bezeichnete Vorrichtung zum Herstellen eines rieselfähigen Pulvers eines Fluorpolymers aus einem pulverförmigen Ausgangsmaterial, welches mindestens ein Fluorpolymer-Material enthält, umfasst eine Verpressvorrichtung 102 mit einem Paar von Walzen 104, welche um parallel zueinander ausgerichtete horizontale Drehachsen 106 drehbar gelagert und zu einer Drehbewegung um die Drehachsen 106 antreibbar sind.

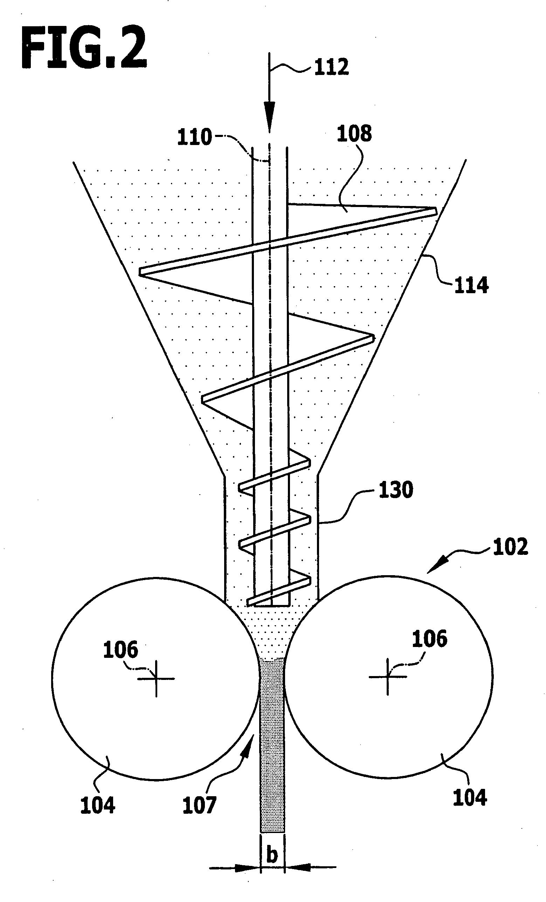

Zwischen den Mantelflächen der einander gegenüberliegenden Walzen 104 ist ein Walzenspalt 107 mit einer Spaltbreite b (siehe Fig. 2) von beispielsweise 1 cm und einer Spaltlänge l (Erstreckung senkrecht zur Zeichenebene der Fig. 2) von beispielsweise 5 cm ausgebildet, so dass die Querschnittsfläche des Walzenspalts beispielsweise 5 cm² beträgt.

Die beiden Walzen 104 drehen sich gegensinnig, mit gleicher Walzendrehzahl, wobei die Drehrichtung der Walzen so gerichtet ist, dass sich die Mantelflächen der Walzen an der Stelle des Walzenspaltes 107 nach unten bewegen.

Das mittels der Walzen 104 zu stückigen, bandförmigen Schülpen zu verpressende pulverförmige Ausgangsmaterial wird dem Walzenspalt 107 mittels einer Schnecke 108 zugeführt, deren vertikale Drehachse 110 im wesentlichen mittig durch den Walzenspalt 107 verläuft.

Die Schnecke 108 weist eine längs der vertikal nach unten gerichteten Förderrichtung 112 abnehmende Steigung und einen längs der Förderrichtung 112 abnehmenden Durchmesser auf.

Die Schnecke 108 ist in einem sich nach unten verjüngenden Vorratstrichter 114 angeordnet, welcher an seinem unteren Ende in eine zylindrische Förderkammer 130 übergeht, die an den Mantelflächen der Walzen 104 endet.

Der Vorratstrichter 114 ist oben bis auf eine Einfüllöffnung geschlossen.

Ein an der Einfüllöffnung angeordnetes grobmaschiges Gitter verhindert ein unbeabsichtigtes Eingreifen einer Bedienungsperson in die Schnecke 108.

Durch das obere offene Ende des Vorratstrichters wird das zu verpressende Ausgangsmaterial mittels einer Schaufel zugeführt und mittels der vertikal angeordneten Schnecke 108 dem Walzenspalt 107 zudosiert.

Der Schneckenschaft reicht dabei bis in den Zwickel zwischen den Mantelflächen der Walzen 104 hinein.

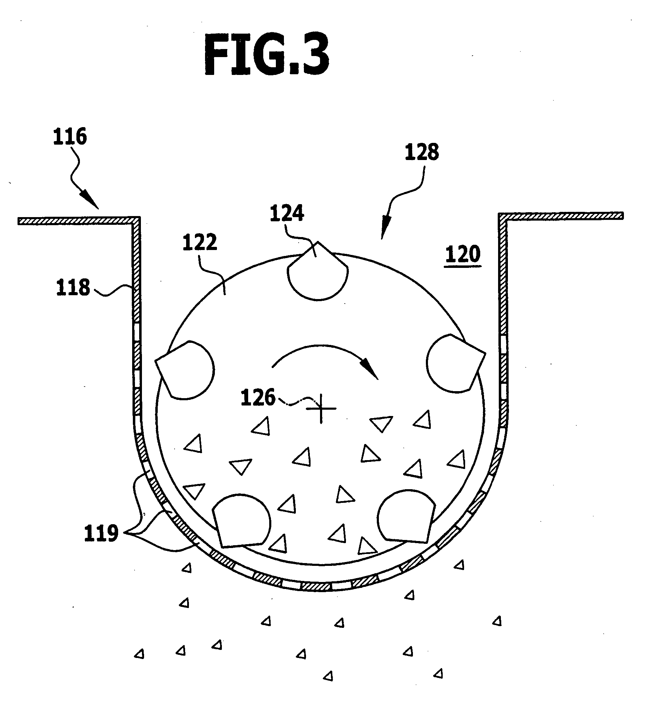

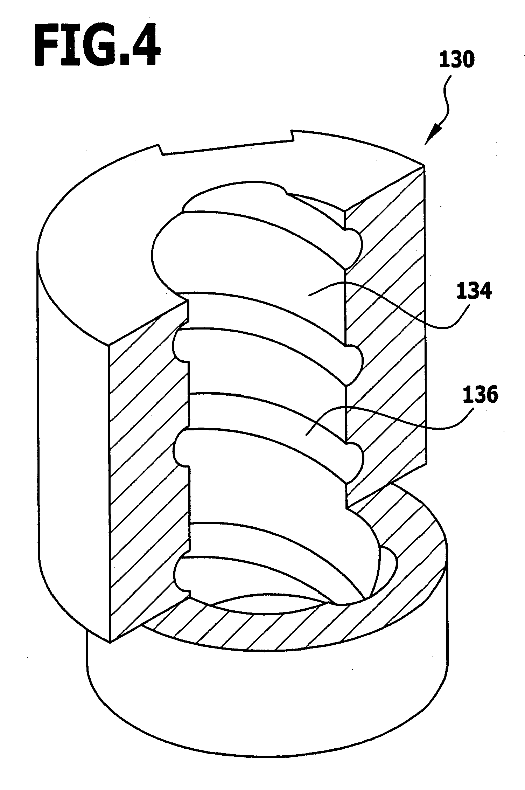

Die in den Fig. 3 und 4 im einzelnen dargestellte zylindrische Förderkammer 130 ist zur Unterstützung der Vorschubwirkung der Schnecke 108 an ihrer inneren Umfangswand 134 mit einer wendelförmigen Nut 136 versehen, welche sich in mehreren Gängen mit derselben Drehrichtung wie die Schnecke 108 um die Längsachse 138 der Förderkammer 130 herum erstreckt.

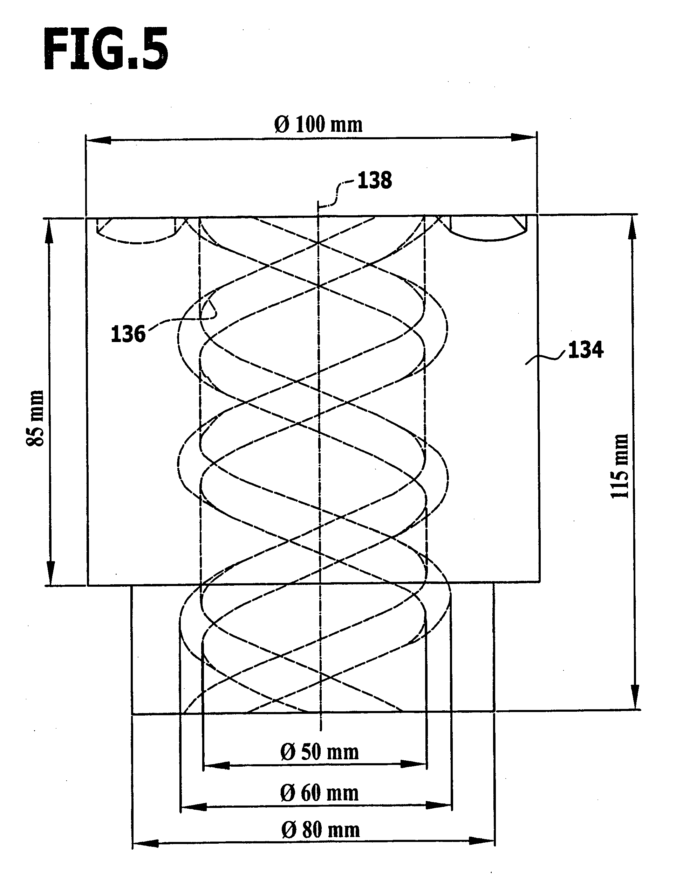

In der in Fig. 5 dargestellten Abwicklung der Umfangswand der Förderkammer 130 sind zwei solche Nuten 136 mit entgegengesetzter Drehrichtung gezeigt, welche in Abhängigkeit von der Drehrichtung der Schnecke 108 wahlweise vorgesehen sein können.

Alternativ hierzu kann auch eine Förderkammer mit einer glatten inneren Umfangswand verwendet werden.

Das vorverdichtete und partiell entlüftete Ausgangsmaterial wird von den Walzen 104 zu den stückigen, bandförmigen Schülpen verpresst, welche anschließend in eine unterhalb der Verpressvorrichtung 102 angeordnete Siebmühle 116 gelangen.

Die in Fig. 3 im einzelnen dargestellte Siebmühle 116 umfasst ein gekrümmtes Reibeblech 118, das mit Löchern 119 mit Durchmessern im Bereich von ungefähr 1 mm bis ungefähr 6 mm versehen ist.

In dem vom Reibeblech 118 umgebenen Innenraum 120 der Siebmühle 116 dreht sich ein Rotor 122 mit beispielsweise fünf Flügeln 124 um eine horizontale Drehachse 126.

Der Rotor 122 wird mit einer Drehzahl im Bereich von ungefähr 60 U/min. bis ungefähr 400 U/min. betrieben.

Die mittels der Verpressvorrichtung 102 hergestellten Schülpen gelangen durch eine Eintrittsöffnung 128 in den Innenraum 120 der Siebmühle 116 und werden dort von dem Rotor 122 und dem Reibeblech 118 zu einem rieselfähigen Pulver zerrieben.

Dieses rieselfähige Pulver gelangt durch die Löcher in dem Reibeblech 118 aus der Siebmühle 116 heraus und wird in einem (nicht dargestellten) Auffangbehälter aufgefangen.

Aus dem Auffangbehälter wird das rieselfähige Pulver seiner weiteren Verwendung, beispielsweise zur Ramextrusion von Polymer-Werkstücken, zugeführt.

Im folgenden werden mehrere Beispiele eines mittels der vorstehend beschriebenen Vorrichtung 100 durchgeführten Verfahrens zum Herstellen eines rieselfähigen Pulvers eines Fluorpolymers aus einem pulverförmigen Ausgangsmaterial beschrieben.

In allen diesen Beispielen wird als Verpressvorrichtung 102 der PHARMAPAKTOR L200/50 P der Firma Hosokawa Bepex GmbH, Daimlerstraße 8, 74211 Leingarten, Deutschland, verwendet.

Der Pharmapaktor ist mit Glattwalzen mit einer leichten Querriffelung ausgerüstet.

Die Vorverdichtung erfolgt mit einer zylindrisch/konischen Vorverdichterschnecke.

In den Kompaktortrichter sind zwei Längsstäbe eingeschweißt.

In die Innenseite der Kompaktorkammer können Nuten eingefräst sein, die wendelförmig um die Durchlaufrichtung des Ausgangsmaterials verlaufen.

Die Breite b des Walzenspalts 107 beträgt in allen Beispielen 1 cm, die Länge l des Walzenspalts 107 jeweils 5 cm, so dass die Querschnittsfläche des Walzenspalts 107 jeweils 5 cm² beträgt.

Ferner wird in diesen Beispielen als Siebmühle die Siebmühle FC 200 der Firma Hosokawa Bepex GmbH, Daimlerstraße 8, 74211 Leingarten, Deutschland, verwendet.

### Beispiel 1

Als pulverförmiges Ausgangsmaterial wird das feingemahlene PTFE-Pulver vom Typ TF 1750 verwendet, das von der Firma Dyneon GmbH & Co. KG, Werk Gendorf, 84504 Burgkirchen, Deutschland, vertrieben wird. Hierbei handelt es sich um ein nach dem Suspensions-Polymerisationsverfahren hergestelltes PTFE-Pulver, das mittels einer Luftstrahlmühle zu einem mittleren Korndurchmesser von d₅₀ von 25 µm gemahlen worden ist.

Das Schüttgewicht des verwendeten Ausgangsmaterials beträgt 370 g/l.

Dieses Ausgangsmaterial wird mittels einer Schaufel in den Vorratstrichter 114 gegeben und mittels der Schnecke 108 in den Walzenspalt 107 gefördert.

Die Schnecke 108 weist die Schneckenparameter 60; 64/100 mm auf, was bedeutet, dass die Ganghöhe der Schnecke (Abstand von Wendel zu Wendel) 60 mm beträgt, dass der Außendurchmesser der Schnecke 108 in deren unterem zylindrischen Teil 64 mm beträgt und dass sich dieser Außendurchmesser im oberen konischen Teil der Schnecke 108 auf 100 mm erweitert.

Diese Schnecke 108 wird mit einer Schneckendrehzahl von 18 U/min., einem Schneckenlaststrom von 1,3 A und mit einer Durchsatzleistung von 110 kg/h betrieben.

Das Ausgangsmaterial wird zwischen den Walzen 104 zu stückigen, bandförmigen Schülpen verpresst.

Die Walzen 104 werden mit einer spezifischen Anpresskraft von 3 kN/cm, einer Walzendrehzahl von 4 U/min. und einem Walzenlaststrom von 3,0 A betrieben.

Eine der verwendeten Walzen weist eine konkav gekrümmte Walzenmantelfläche auf; die andere der verwendeten Walzen weist eine glattzylindrische Walzenmantelfläche auf.

Die erhaltenen Schülpen werden in der Siebmühle 116 zu einem rieselfähigen Pulver mit einer mittleren Korngröße von d₅₀ von 700 µm und einem Schüttgewicht von ungefähr 800 g/l zermahlen.

Das erhaltene Pulver weist eine gute Rieselfähigkeit auf und lässt sich durch automatische Vorrichtungen leicht zur Weiterverarbeitung dosieren.

### Beispiel 2

Dieses Ausführungsbeispiel unterscheidet sich von dem Beispiel 1 lediglich dadurch, dass die spezifische Anpresskraft der Walzen auf 2 kN/cm erniedrigt und die Walzendrehzahl auf 6 U/min. erhöht wird.

Die Durchsatzleistung der Schnecke wird dabei auf 150 kg/h erhöht.

Auch bei diesem Ausführungsbeispiel ergibt sich ein gut rieselfähiges Pulver.

### Beispiel 3

Dieses Ausführungsbeispiel unterscheidet sich von dem Beispiel 1 dadurch, dass die verwendeten Walzen mit einem Wellprofil von 6 mm, seitlich offen, versehen sind.

Diese Walzen werden mit einer spezifischen Anpresskraft von 5 kN/cm bei einer Walzendrehzahl von 5 U/min. und einem Walzenlaststrom von 3,0 A betrieben.

Die in diesem Ausführungsbeispiels verwendete Schnecke weist die Schneckenparameter 60/66/120 mm auf, also eine Ganghöhe von 60 mm und einen Außendurchmesser, der im zylindrischen Teil 66 mm beträgt und sich im konischen Teil auf 120 mm erweitert.

Diese Schnecke wird mit einer Schneckendrehzahl von 18 U/min. bei einem Schneckenlaststrom von 1,3 A und einer Durchsatzleistung von 130 kg/h betrieben.

Auch bei diesem Ausführungsbeispiel wird ein gut rieselfähiges Pulver erhalten.

### Beispiel 4

Bei diesem Ausführungsbeispiel wird als pulverförmiges Ausgangsmaterial des fein gemahlene PTFE-Pulver vom Typ NXT 75 verwendet, welches von der Firma DuPont de Nemours (Deutschland) GmbH, Bad Homburg, vertrieben wird. Hierbei handelt es sich um ein nach dem Suspensions-Polymerisationsverfahren hergestelltes chemisch modifiziertes PTFE, das mittels einer Luftstrahlmühle zu einem Pulver mit einem mittleren Korndurchmesser d₅₀ von 33 µm gemahlen worden ist.

Das Schüttgewicht des verwendeten Ausgangsmaterials beträgt 440 g/l.

Eine der verwendeten Walzen weist eine konkav gekrümmte Walzenmantelfläche auf; die andere der verwendeten Walzen weist eine glattzylindrische Walzenmantelfläche auf.

Die Walzen 104 werden mit einer spezifischen Anpresskraft von 3 kN/cm, einer Walzendrehzahl von 4 U/min. und einem Walzenlaststrom von 3,5 A betrieben.

Die verwendete Schnecke weist die Schneckenparameter 60/64/100 mm auf, was bedeutet, dass die Ganghöhe der Schnecke (Abstand von Wendel zu Wendel) 60 mm beträgt, dass der Außendurchmesser der Schnecke 108 in der unterem zylindrischen Teil 64 mm beträgt und dass sich dieser Außendurchmesser im oberen konischen Teil der Schnecke 108 auf 100 mm erweitert.

Diese Schnecke 108 wird mit einer Schneckendrehzahl von 18 U/min., einem Schneckenlaststrom von 1,4 A und mit einer Durchsatzleistung von 120 kg/h betrieben.

Im übrigen stimmt dieses Ausführungsbeispiel mit dem Beispiel 1 überein.

Auch bei diesem Ausführungsbeispiel wird ein gut rieselfähiges Pulver erhalten.

### Beispiel 5

Dieses Ausführungsbeispiel unterscheidet sich von dem Beispiel 4 dadurch, dass die Walzen mit einer spezifischen Anpresskraft von 2 kN/cm, einer Walzendrehzahl von 6 U/min. und einem Walzenlaststrom von 3,5 A betrieben werden.

Die Durchsatzleistung der Schnecke erhöht sich hierbei auf 170 kg/h.

Auch bei diesem Ausführungsbeispiel wird ein gut rieselfähiges Pulver erhalten.

### Beispiel 6

Dieses Ausführungsbeispiel unterscheidet sich von dem Beispiel 4 dadurch, dass die verwendeten Walzen mit einem Wellprofil von 6 mm, seitlich offen, versehen sind.

Diese Walzen werden mit einer spezifischen Anpresskraft von 5 kN/cm bei einer Walzendrehzahl von 5 U/min. und einem Walzenlaststrom von 3,5 A betrieben.

Die verwendete Schnecke weist die Schneckenparameter 60/66/120 mm, d.h. eine Ganghöhe von 60 mm und einen Außendurchmesser, der im zylindrischen Teil 66 mm beträgt und sich im konischen Teil auf 120 mm erweitert, auf.

Diese Schnecke wird mit einer Schneckendrehzahl von 18 U/min. bei einem Schneckenlaststrom von 1,4 A und einer Durchsatzleistung von 145 kg/h betrieben.

Auch bei diesem Ausführungsbeispiel wird ein gut rieselfähiges Pulver erhalten.

## Patentansprüche

1. Trockengranulierungsverfahren zum Herstellen eines rieselfähigen Pulvers eines Fluorpolymers aus einem pulverförmigen Ausgangsmaterial, welches mindestens ein Fluorpolymer-Material enthält, umfassend folgende Verfahrensschritte:
- Verpressen des pulverförmigen Ausgangsmaterials zu Schülpen;
- Zerkleinern der Schülpen zu dem rieselfähigen Pulver;
**dadurch gekennzeichnet,**
**dass** das Ausgangsmaterial als Fluorpolymer-Material Polytetrafluorethylen (PTFE) oder modifiziertes Polytetrafluorethylen enthält.

2. Trockengranulierungsverfahren nach Anspruch 1, **dadurch gekennzeichnet, dass** das pulverförmige Ausgangsmaterial ein Schüttgewicht von 100 g/l bis 700 g/l aufweist.

3. Trockengranulierungsverfahren nach einem der Ansprüche 1 oder 2, **dadurch gekennzeichnet, dass** das rieselfähige Pulver ein Schüttgewicht von 400 g/l bis 1.600 g/l aufweist.

4. Trockengranulierungsverfahren nach einem der Ansprüche 1 bis 3, **dadurch gekennzeichnet, dass** das rieselfähige Pulver ein höheres Schüttgewicht aufweist als das pulverförmige Ausgangsmaterial.

5. Trockengranulierungsverfahren nach einem der Ansprüche 1 bis 4, **dadurch gekennzeichnet, dass** das Fluorpolymer-Material des pulverförmigen Ausgangsmaterials eine mittlere Korngröße d₅₀ von 5 µm bis 100 µm aufweist.

6. Trockengranulierungsverfahren nach einem der Ansprüche 1 bis 5, **dadurch gekennzeichnet, dass** das rieselfähige Pulver eine mittlere Korngröße d₅₀ von 300 µm bis 2.500 µm aufweist.

7. Trockengranulierungsverfahren nach einem der Ansprüche 1 bis 6, **dadurch gekennzeichnet, dass** das rieselfähige Pulver eine höhere mittlere Korngröße d₅₀ aufweist als das Fluorpolymer-Material in dem pulverförmigen Ausgangsmaterial.

8. Trockengranulierungsverfahren nach einem der Ansprüche 1 bis 7, **dadurch gekennzeichnet, dass** das Ausgangsmaterial mittels einer Schnecke (108) zu einer Verpressvorrichtung (102) gefördert wird.

9. Trockengranulierungsverfahren nach Anspruch 8, **dadurch gekennzeichnet, dass** die Verpressvorrichtung (102) zwei einander gegenüberliegende Walzen (104) aufweist und die Schnecke (108) bis in den Zwickelbereich zwischen den einander gegenüberliegenden Walzen (104) hineinreicht.

10. Trockengranulierungsverfahren nach einem der Ansprüche 8 oder 9, **dadurch gekennzeichnet, dass** die Schnecke (108) eine im Wesentlichen vertikale Drehachse (110) aufweist.

11. Trockengranulierungsverfahren nach einem der Ansprüche 8 bis 10, **dadurch gekennzeichnet, dass** die Schnecke (108) mit einer Drehzahl von 10 U/min. bis 100 U/min. betrieben wird.

12. Trockengranulierungsverfahren nach einem der Ansprüche 8 bis 11, **dadurch gekennzeichnet, dass** die Schnecke (108) eine längs der Förderrichtung (112) der Schnecke (108) abnehmende Steigung aufweist.

13. Trockengranulierungsverfahren nach einem der Ansprüche 8 bis 12, **dadurch gekennzeichnet, dass** die Schnecke (108) einen längs der Förderrichtung (112) der Schnecke (108) abnehmenden Durchmesser aufweist.

14. Trockengranulierungsverfahren nach einem der Ansprüche 8 bis 13, **dadurch gekennzeichnet, dass** die Schnecke (108) in einer Förderkammer angeordnet ist, welche mindestens eine wendelförmig um die Förderrichtung (112) der Schnecke (108) verlaufende Nut aufweist.

15. Trockengranulierungsverfahren nach einem der Ansprüche 1 bis 14, **dadurch gekennzeichnet, dass** das pulverförmige Ausgangsmaterial vor dem Verpressen vorverdichtet wird.

16. Trockengranulierungsverfahren nach einem der Ansprüche 1 bis 15, **dadurch gekennzeichnet, dass** das Ausgangsmaterial vor dem Verpressen zumindest teilweise entlüftet wird.

17. Trockengranulierungsverfahren nach einem der Ansprüche 1 bis 16, **dadurch gekennzeichnet, dass** das Ausgangsmaterial mittels mindestens einer Walze (104) zu den Schülpen verpresst wird.

18. Trockengranulierungsverfahren nach Anspruch 17, **dadurch gekennzeichnet, dass** die Walze (104) mit einer spezifischen Anpresskraft von 1 kN/cm bis 10 kN/cm betrieben wird.

19. Trockengranulierungsverfahren nach einem der Ansprüche 17 oder 18, **dadurch gekennzeichnet, dass** die Walze (104) mit einer Drehzahl von 3 U/min. bis 10 U/min. betrieben wird.

20. Trockengranulierungsverfahren nach einem der Ansprüche 17 bis 19, **dadurch gekennzeichnet, dass** die Walze (104) mit einer profilierten Walzenmantelfläche versehen ist.

21. Trockengranulierungsverfahren nach einem der Ansprüche 1 bis 20, **dadurch gekennzeichnet, dass** die spezifische Dichte der durch Verpressen des Ausgangsmaterials hergestellten Schülpen von 1,3 g/cm³ bis 2,1 g/cm³ beträgt.

22. Trockengranulierungsverfahren nach einem der Ansprüche 1 bis 21, **dadurch gekennzeichnet, dass** die Schülpen mittels einer Mühle zerkleinert werden.

23. Trockengranulierungsverfahren nach Anspruch 22, **dadurch gekennzeichnet, dass** die Schülpen mittels einer Siebmühle (116) zerkleinert werden.

24. Trockengranulierungsverfahren nach einem der Ansprüche 22 oder 23, **dadurch gekennzeichnet, dass** die Mühle mit einer Drehzahl von 60 U/min. bis 400 U/min. betrieben wird.

25. Rieselfähiges Pulver eines Fluorpolymers, das durch ein Trockengranulierungsverfahren nach einem der Ansprüche 1 bis 24 hergestellt ist.

26. Verwendung eines rieselfähigen Pulvers nach Anspruch 25 zur Herstellung von Polymer-Werkstücken mittels Ramextrusion.

## Claims

1. Dry granulation method for the production of a flowable powder of a fluoropolymer from a starting material in powder form, which contains at least one fluoropolymer material, comprising the following method steps:
- pressing the starting material in powder form into lumps;
- crushing the lumps to form the flowable powder;
**characterised in that**,
the starting material contains polytetrafluoroethylene (PTFE) or modified polytetrafluoroethylene as fluoropolymer material.

2. Dry granulation method according to Claim 1, **characterised in that** the starting material in powder form has a bulk density of 100 g/l to 700 g/l.

3. Dry granulation method according to Claim 1 or 2, **characterised in that** the flowable powder has a bulk density of 400 g/l to 1 600 g/l.

4. Dry granulation method according to any of Claims 1 to 3, **characterised in that** the flowable powder has a higher bulk density than the starting material in powder form.

5. Dry granulation method according to any of Claims 1 to 4, **characterised in that** the fluoropolymer material of the starting material in powder form has an average grain size d₅₀ of 5 µm to 100 µm.

6. Dry granulation method according to any of Claims 1 to 5, **characterised in that** the flowable powder has an average grain size d₅₀ of 300 µm to 2 500 µm.

7. Dry granulation method according to any of Claims 1 to 6, **characterised in that** the flowable powder has a higher average grain size d₅₀ than the fluoropolymer material in the starting material in powder form.

8. Dry granulation method according to any of Claims 1 to 7, **characterised in that** the starting material is conveyed by means of a worm device (108) to a pressing device (102).

9. Dry granulation method according to Claim 8, **characterised in that** the pressing device (102) has two opposing rollers (104) and the worm device (108) reaches into the wedge-like region between the opposing rollers (104).

10. Dry granulation method according to Claim 8 or 9, **characterised in that** the worm device (108) has a substantially vertical rotational axis (110).

11. Dry granulation method according to any of Claims 8 to 10, **characterised in that** the worm device (108) is operated at a speed of 10 rpm to 100 rpm.

12. Dry granulation method according to any of Claims 8 to 11, **characterised in that** the worm device (108) has a pitch that decreases in the transport direction (112) of the worm device (108).

13. Dry granulation method according to any of Claims 8 to 12, **characterised in that** the worm device (108) has a diameter that decreases in the transport direction (112) of the worm device (108).

14. Dry granulation method according to any of Claims 8 to 13, **characterised in that** the worm device (108) is arranged in a transport chamber, which has at least one groove running in a spiral shape around the transport direction (112) of the worm device (108).

15. Dry granulation method according to any of Claims 1 to 14, **characterised in that** the starting material in powder form is pre-compacted before pressing.

16. Dry granulation method according to any of Claims 1 to 15, **characterised in that** the starting material is at least partially deaerated before pressing.

17. Dry granulation method according to any of Claims 1 to 16, **characterised in that** the starting material is pressed to form the lumps by means of at least one roller (104).

18. Dry granulation method according to Claim 17, **characterised in that** the roller (104) is operated with a specific contact force of 1 kN/cm to 10 kN/cm.

19. Dry granulation method according to Claim 17 or 18, **characterised in that** the roller (104) is operated at a speed of 3 rpm to 10 rpm.

20. Dry granulation method according to any of Claims 17 to 19, **characterised in that** the roller (104) is provided with a profiled rolling surface.

21. Dry granulation method according to any of Claims 1 to 20, **characterised in that** the relative density of the lumps produced by pressing the starting material amounts to 1.3 g/cm³ to 2.1 g/cm³.

22. Dry granulation method according to any of Claims 1 to 21, **characterised in that** the lumps are crushed by means of a mill.

23. Dry granulation method according to Claim 22, **characterised in that** the lumps are crushed by means of a screen-type mill (116).

24. Dry granulation method according to Claim 22 or 23, **characterised in that** the mill is operated at a speed of 60 rpm to 400 rpm.

25. Flowable powder of a fluoropolymer, which is produced by a dry granulation method according to any one of claims 1 to 24.

26. Use of a flowable powder according to Claim 25 for the production of polymer workpieces by means of ram extrusion.

## Revendications

1. Procédé de granulation par voie sèche servant à fabriquer une poudre apte à l'écoulement d'un fluoropolymère constitué d'un matériau de départ pulvérulent, qui contient au moins un matériau à base de fluoro-polymère, comprenant les étapes de procédé suivantes consistant à :
- compresser le matériau de départ pulvérulent pour obtenir des blocs ;
- broyer les blocs pour obtenir une poudre apte à l'écoulement ;
**caractérisé en ce que**
le matériau de départ contient comme matériau à base de fluoropolymère du polytétrafluoroéthylène (PTFE) ou un polytétrafluoroéthylène modifié.

2. Procédé de granulation par voie sèche selon la reven-dication 1, **caractérisé en ce que** le matériau de départ pulvérulent présente une densité apparente allant de 100 g/l à 700 g/l.

3. Procédé de granulation par voie sèche selon l'une quel-conque des revendications 1 ou 2, **caractérisé en ce que** la poudre apte à l'écoulement présente une densité apparente allant de 400 g/l à 1600 g/l.

4. Procédé de granulation par voie sèche selon l'une quel-conque des revendications 1 à 3, **caractérisé en ce que** la poudre apte à l'écoulement présente une densité apparente importante que le matériau de départ pulvérulent.

5. Procédé de granulation par voie sèche selon l'une quel-conque des revendications 1 à 4, **caractérisé en ce que** le matériau à base de fluoropolymère du matériau de départ pulvérulent présente une granulométrie d₅₀ moyenne allant de 5 µm à 100 µm.

6. Procédé de granulation par voie sèche selon l'une quel-conque des revendications 1 à 5, **caractérisé en ce que** la poudre apte à l'écoulement présente une granulo-métrie d₅₀ moyenne allant de 300 µm à 2500 µm.

7. Procédé de granulation par voie sèche selon l'une quel-conque des revendications 1 à 6, **caractérisé en ce que** la poudre apte à l'écoulement présente une granulo-métrie d₅₀ moyenne supérieure à celle du matériau à base de fluoropolymère dans le matériau de départ pulvérulent.

8. Procédé de granulation par voie sèche selon l'une quel-conque des revendications 1 à 7, **caractérisé en ce que** le matériau de départ est acheminé au moyen d'une vis sans fin (108) à un dispositif de compression (102).

9. Procédé de granulation par voie sèche selon la revendication 8, **caractérisé en ce que** le dispositif de compression (102) présente deux cylindres (104) se faisant face, et **en ce que** la vis sans fin (108) atteint l'intérieur de la zone de soufflet entre les cylindres (104) se faisant face.

10. Procédé de granulation par voie sèche selon l'une quel-conque des revendications 8 ou 9,
**caractérisé en ce que** la vis sans fin (108) présente un axe de rotation (110) essentiellement vertical.

11. Procédé de granulation par voie sèche selon l'une quel-conque des revendications 8 à 10,
**caractérisé en ce que** la vis sans fin (108) fonctionne à une vitesse de rotation allant de 10 t/min à 100 t/min.

12. Procédé de granulation par voie sèche selon l'une quel-conque des revendications 8 à 11, **caractérisé en ce que** la vis sans fin (108) présente un pas diminuant le long du sens d'acheminement (112) de la vis sans fin (108).

13. Procédé de granulation par voie sèche selon l'une quel-conque des revendications 8 à 12, **caractérisé en ce que** la vis sans fin (108) présente un diamètre dimi-nuant le long du sens d'acheminement (112) de la vis sans fin (108).

14. Procédé de granulation par voie sèche selon l'une quel-conque des revendications 8 à 13, **caractérisé en ce que** la vis sans fin (108) est disposée dans une chambre d'acheminement, qui présente au moins une rainure s'étendant de manière à présenter une forme hélicoïdale autour du sens d'acheminement (112) de la vis sans fin (108).

15. Procédé de granulation par voie sèche selon l'une quel-conque des revendications 1 à 14, **caractérisé en ce que** le matériau de départ pulvérulent est préalable-ment compressé avant la compression.

16. Procédé de granulation par voie sèche selon l'une quel-conque des revendications 1 à 15, **caractérisé en ce que** le matériau de départ est au moins en partie aéré avant la compression.

17. Procédé de granulation par voie sèche selon l'une quel-conque des revendications 1 à 16, **caractérisé en ce que** le matériau de départ est compressé au moyen au moins d'un cylindre (104) pour former des blocs.

18. Procédé de granulation par voie sèche selon la reven-dication 17, **caractérisé en ce que** le cylindre (104) fonctionne à une force de pression spécifique allant de 1 KN/cm à 10 kN/cm.

19. Procédé de granulation par voie sèche selon l'une quel-conque des revendications 17 ou 18, **caractérisé en ce que** le cylindre (104) fonctionne à une vitesse de rotation allant de 3 t/min à 10 t/min.

20. Procédé de granulation par voie sèche selon l'une quel-conque des revendications 17 à 19, **caractérisé en ce que** le cylindre (104) est pourvu d'une surface extérieure de cylindre profilée.

21. Procédé de granulation par voie sèche selon l'une quel-conque des revendications 1 à 20, **caractérisé en ce que** la densité spécifique des blocs fabriqués par compression du matériau de départ est comprise entre 1,3 g/cm³ et 2,1 g/cm³.

22. Procédé de granulation par voie sèche selon l'une quel-conque des revendications 1 à 21, **caractérisé en ce que** les blocs sont broyés au moyen d'un broyeur.

23. Procédé de granulation par voie sèche selon la revendi-cation 22, **caractérisé en ce que** les blocs sont broyés au moyen d'un broyeur à tamis (116).

24. Procédé de granulation par voie sèche selon l'une quel-conque des revendications 22 ou 23, **caractérisé en ce que** le broyeur fonctionne à une vitesse de rotation allant de 60 t/min à 400 t/min.

25. Poudre apte à l'écoulement d'un fluoropolymère, qui est fabriquée par un procédé de granulation par voie sèche selon l'une quelconque des revendications 1 à 24.

26. Utilisation d'une poudre apte à l'écoulement selon la revendication 25 servant à fabriquer des pièces à usiner à base de polymère par extrusion-frittage.
